# EUROPEAN PATENT APPLICATION

(11) **EP 1 767 577 A1**
(43) Date of publication of application: **28.03.2007**
(21) Application number: 05765194.5
(22) Date of filing: 30.06.2005
(51) Int. Cl.: C08L 67/00, C08L 15/00, C08L 33/06, C08L 71/02

(54) **THERMOPLATIC ELASTOMER COMPOSITION AND MOLDED PRODUCT THEREOF**

(30) Priority: 30.06.2004 JP 2004192817
(71) Applicant: ZEON CORPORATION, Tokyo 100-8246 (JP)
(72) Inventor: MASUDA, Hirofumi, c/o ZEON CORPORATION, Tokyo 1008246 (JP); UMETSU, Kiyonori, c/o ZEON CORPORATION, Tokyo 1008246 (JP); EJIRI, Kazuhiro, c/o ZEON CORPORATION, Tokyo 1008246 (JP)
(74) Representative: Albrecht, Thomas
(86) International application number: PCT/JP2005/012039
(87) International publication number: WO 2006/003972

(57) **Abstract**

A thermoplastic elastomer composition comprised of 20 to 95 wt% of a polyester resin (A) having a melt flow rate of 4 g/10 min to less than 20 g/10 min and 80 to 5 wt% of at least one type of rubber (B) selected from an acryl rubber (B1), hydrogenated nitrile rubber (B2), and polyether rubber (B3), wherein the rubber (B) is dynamically cross-linked. The composition can be shaped and suitably used for a seal part, hose part, boot part, or other auto related rubber part.

## Description

### TECHNICAL FIELD

The present invention relates to a thermoplastic elastomer composition comprised of a polyester resin and specific rubber, more specifically to a thermoplastic elastomer composition superior in the properties of tensile strength, elongation, compression set, and fatigue resistance.

### BACKGROUND ART

A polyester elastomer is well regarded as a thermoplastic elastomer having tensile strength, elongation, and flexibility. However, this elastomer has too high a hardness, too large a compression set, and inferior fatigue resistance for use for applications as a rubbery elastomer. As methods for improving these features, various methods of mixing rubber into the elastomer have been proposed. In recent years, it has been proposed that the cross-linked rubber particles are finely dispersed in the elastomer matrix for improving the rubber elasticity and compression set.

For example, Patent Document 1 proposes a thermoplastic elastomer composition comprised of a cross-linked rubber containing at least 20% of a gel fraction mixed to disperse it in a polyester elastomer and proposes a composition comprised of a polyether ester elastomer in which a cross-linking carboxy modified nitrile-butadiene rubber is kneaded by a Bravender mill. However, just mixing a cross-linking rubber in an elastomer to disperse it cannot be said to be sufficient for reduction of the compression set or improvement of the fatigue resistance.

On the other hand, Patent Document 2 proposes a method of kneading a polyamide elastomer or polyester elastomer with core-shell two-layer structure rubber particles comprised of a core layer of cross-linking rubber and a shell layer of rubber having a cross-linkable group in the presence of a cross-linking agent and dispersing the rubber particles in the elastomer while cross-linking the shell layer. However, according to this method, while the tensile properties and compression set are improved, the fatigue resistance cannot be said to be sufficiently improved.

Further, Patent Document 3 proposes a thermoplastic elastomer composition comprised of a polyester, polycarbonate, or polyphenylene oxide and an acryl rubber, ethylene-acrylic acid ester rubber or a rubber of a combination of the same at least partially cross-linked by a multifunctional oxazoline, oxazine, imidazoline, carbodiimide, or a cross-linking agent of a composition of the same. However, a shaped article of this composition also is insufficient in reduction of the compression set and is inferior in the fatigue resistance.

Further, Patent Document 4 proposes a composition for a joint boots having a melt flow rate of 20 to 150 comprised of a polyester block copolymer, rubber, and plasticizer kneaded and dynamically cross-linked, but while this gives a shaped article improved in tensile strength and oil resistance, no effect is seen in reduction of the compression set and improvement of the fatigue resistance.
Patent Document 1 : Japanese Patent Publication (B2) No. 5-79256
Patent Document 2 : Japanese Patent Publication (A) No. 8-231770
Patent Document 3 : Japanese Patent Publication (A) No. 11-246749
Patent Document 4 : Japanese Patent Publication (A) No. 7-126500

### DISCLOSURE OF THE INVENTION

### PROBLEM TO BE SOLVED BY THE INVENTION

An object of the present invention is to provide a thermoplastic elastomer composition giving a shaped article excellent in tensile strength and elongation, low in compression set, and superior in fatigue resistance.

### MEANS FOR SOLVING THE PROBLEMS

The inventors engaged in intensive research to solve the above problems and as a result discovered that a thermoplastic elastomer composition comprised of a polyester resin having a specific range of a melt flow rate and a specific rubber dynamically cross-linked achieves this object and completed the present invention based on this discovery.

Therefore, according to the present invention, the following first to sixth aspects of the invention are provided:
1. A thermoplastic elastomer composition comprised of:
   20 to 95 wt% of a polyester resin (A) having a melt flow rate of 4 g/10 min to less than 20 g/10 min and
   80 to 5 wt% of at least one type of rubber (B) selected from an acryl rubber (B1), hydrogenated nitrile rubber (B2), and polyether rubber (B3),
   wherein the rubber (B) is dynamically cross-linked.
2. The thermoplastic elastomer composition as set forth in 1, wherein the polyester resin (A) is an aromatic polyester resin.
3. The thermoplastic elastomer composition as set forth in 1 or 2, wherein the polyester resin (A) has a weight average molecular weight of 40,000 to 100,000.
4. The thermoplastic elastomer composition as set forth in any one of 1 to 3, further including 0.1 to 2 parts by weight of a cross-linking agent with respect to 100 parts by weight of the total of the polyester resin (A) and the rubber (B).
5. The thermoplastic elastomer composition as set forth in any one of 1 to 4, further including 1 to 10 parts by weight of a plasticizer with respect to 100 parts by weight of the total of the polyester resin (A) and the rubber (B).
6. A shaped article obtained by molding the thermoplastic elastomer composition as set forth in any one of 1 to 5 at 160 to 350°C.

### EFFECTS OF THE INVENTION

According to the present invention, there is provided a thermoplastic elastomer composition giving a shaped article excellent in tensile strength and elongation, low in compression set, and superior in fatigue resistance. Therefore, this can be used for auto use seals, hoses, boots, and other various rubber parts.

### BEST MODE FOR WORKING THE INVENTION

### Thermoplastic Elastomer Composition

The thermoplastic elastomer composition of the present invention is comprised of 20 to 95 wt% of a polyester resin (A) having a melt flow rate of 4 g/10 min to less than 20 g/10 min and 80 to 5 wt% of at least one type of rubber (B) selected from the group of an acryl rubber (B1), hydrogenated nitrile rubber (B2), and polyether rubber (B3), wherein the (B) is dynamically cross-linked.

### Polyester Resin (A)

The polyester resin (A) used in the present invention is a polymer having ester bonds and is usually obtained by condensation polymerization of a polyhydric alcohol and polybasic acid or polybasic acid ester compound. As the polyester resin (A), an alkyd resin, maleic acid resin, saturated polyester resin, unsaturated polyester resin, or other known polyester resin may be used.

As a polyhydric alcohol, ethyleneglycol, diethyleneglycol, triethyleneglycol, propyleneglycol, butyleneglycol, trimethyleneglycol, cyclohexane dimethanol, etc. may be used.

As a polybasic acid, phthalic acid, fumaric acid, adipic acid, etc. may be used.

Among these, from the viewpoint of the heat resistance, mechanical strength, etc., polyethylene terephthalate, polybutylene terephthalate, polymethylene terephthalate, or another aromatic polyester resin obtained using ethyleneglycol, butyleneglycol, or trimethyleneglycol as a polyhydric alcohol and using phthalic acid as a polybasic acid is particularly preferable.

As the polyester resin (A), one substantially not having a polyether block as a copolymer ingredient is preferable. If using a polyester resin having a polyether block, the heat resistance is liable to fall.

The polyester resin (A) has a melt mass flow rate based on JIS K7210 at 250°C and 2.16 kg load (hereinafter referred to as the "melt flow rate") of 4 g/10 min to less than 20 g/10 min, preferably 5 g/10 min to less than 15 g/10 min, more preferably 5.5 g/10 min to less than 10 g/10 min. If the polyester resin (A) has a melt flow rate in this range, the obtained thermoplastic elastomer composition has a good melt fluidity, a local temperature rise at the time of shaping becomes difficult, and deterioration becomes difficult.

The polyester resin (A) has a weight average molecular weight of usually 40, 000 to 100,000, preferably 60, 000 to 100, 000.

The polyester resin (A) has a melting point of usually 160 to 300°C, preferably 165 to 270°C, more preferably 170 to 220°C. If the melting point is too low, the obtained shaped article is liable to deteriorate in heat resistance, while conversely if it is too high, the polyester resin (A) may deteriorate at the time of working.

### Rubber (B)

The rubber (B) used in the present invention is at least one type of rubber selected from the group comprised of acryl rubber (B1), hydrogenated nitrile rubber (B2), and polyether rubber (B3).

In the present invention, the rubber (B) must have a cross-linking grouop suitable for the dynamic cross-linking explained later. This cross-linkable group may be a cross-linkable group known as a group enabling a reaction with a cross-linking agent generally used for working rubber. Further, it may be suitably selected in accordance with the type of the cross-linking agent used, but is preferably at least one type selected from the group comprised of a halogen-containing group, epoxy group, and carboxyl group.

The rubber (B) has a Mooney viscosity [ML₁₊₄(100°C)] of preferably 10 to 150, more preferably 20 to 120, particularly preferably 30 to 100. If the Mooney viscosity is too low, the obtained shaped article is liable to have a large compression set, while conversely if too high, the shapeability may deteriorate.

As the rubber (B), one containing a gel (also referred to as a "gel fraction") is preferably used. The gel content of the rubber (B) may be measured by the following method. That is, a predetermined amount of rubber (B) is dissolved in a good solvent of the rubber, then the solution is filtered by an #80 mesh metal net or other filter. The solvent insolubles trapped on the filter are dried and measured for weight, then the ratio of weight with respect to the initial predetermined amount is calculated.

The rubber (B) has a gel content of preferably 30 to 100 wt%, more preferably 50 to 100 wt%, particularly preferably 60 to 100 wt%. If the gel content is in this range, a thermoplastic elastomer composition with a lower compression set is obtained. The gel fraction is preferably evenly dispersed in the rubber (B).

### Acryl Rubber (B1)

The acryl rubber (B1) is a polymer having monomer units of an acrylic acid ester monomer or methacrylic acid ester monomer [hereinafter abbreviated as a "(meth)acrylic acid ester monomer"] and a balance of monomers of another monomer able to be copolymerized with a (meth)acrylic acid ester monomer. The content of the (meth)acrylic acid ester monomer units in the acryl rubber (B1) is preferably 80 to 99.5 wt%, more preferably 90 to 99 wt%, particularly preferably 95 to 98 wt%.

As the (meth)acrylic acid ester monomer, for example, a (meth) acrylic acid alkyl ester monomer, a (meth)acrylic acid alkoxyalkyl ester monomer, etc. may be mentioned.

As the (meth)acrylic acid alkyl ester monomer, an ester of a C₁ to C₈ alkanol and (meth)acrylic acid is preferable. Specifically, methyl (meth) acrylate, ethyl (meth) acrylate, n-propyl (meth)acrylate, n-butyl (meth)acrylate, isopropyl (meth)acrylate, isobutyl (meth)acrylate, n-hexyl (meth)acrylate, 2-ethylhexyl (meth)acrylate, cyclohexyl (meth)acrylate, etc. may be mentioned. Among these, ethyl (meth)acrylate and n-butyl (meth)acrylate are preferable, and ethyl acrylate and n-butyl acrylate are more preferable.

As the (meth) acrylate alkoxyalkyl ester monomer, an ester of C₂ to C₈ alkoxyalkanol and (meth) acrylic acid is preferable, specifically methoxymethyl (meth) acrylate, ethoxymethyl (meth) acrylate, 2-ethoxyethyl (meth) acrylate, 2-butoxyethyl (meth) acrylate, 2-methoxyethyl (meth) acrylate, 2-propoxyethyl (meth) acrylate, 3-methoxypropyl (meth) acrylate, 4-methoxybutyl (meth) acrylate, etc. may be mentioned. Among these, 2-ethoxyethyl (meth)acrylate and 2-methoxyethyl (meth)acrylate are preferable. 2-ethoxyethyl acrylate and 2-methoxyethyl acrylate are particularly preferred.

As another monomer copolymerizable with a (meth)acrylic acid ester monomer, a monomer containing a cross-linkable group containing a cross-linkable group suitable for dynamic cross-linking such as a halogen-containing group, epoxy group, or carboxyl group is preferable.

As a monomer having a halogen-containing group, 2-chloroethylvinyl ether or another vinyl ether containing a halogen; chloromethylstyrene or another halogen-containing styrene derivative; vinyl chloroacetate, or another halogen-containing vinyl acetate; etc. may be mentioned.

As an epoxy group-containing monomer, an allylglycidyl ether, glycidyl (meth) acrylate, etc. may be mentioned.

As a carboxyl group-containing monomer, acrylic acid, methacrylic acid, itaconic acid, fumaric acid, maleic acid, or another ethylenic unsaturated monocarboxylic acid or ethylenic unsaturated polyhydric carboxylic acid; mono n-butyl maleate, mono n-butyl fumarate, or other butenedionic acid monoalkylester; monocycloalkyl maleate, monocycloalkyl fumarate, or other butenedionic acid monocycloalkyl ester; etc. may be mentioned.

The amount of the monomer containing a cross-linkable group used is preferably 0.5 to 10 wt%, more preferably 1 to 5 wt% in the total monomer used for polymerization of acryl rubber (B1). If the amount used of the monomer containing a cross-linkable group is too small, the dynamic cross-linking is liable not to sufficiently proceed, while if too great, stable polymerization of the rubber (B1) may not occur in the process of production of the acryl rubber (B1).

Further, when the acryl rubber (B1) contains a gel fraction, as the other monomer able to copolymerize with the (meth)acrylic acid ester monomer, a monomer containing an unsaturated cross-linkable group having at least two vinyl groups able to spontaneously cross-link during the polymerization reaction of the acryl rubber (B1) is preferably used.

As an example of a monomer containing an unsaturated cross-linkable group, divinylbenzene, 1,3,5-trivinylbenzene, or another multifunctional vinyl compound; diallyl phthalate, diallyl fumarate, or another diallyl compound; trimethylolpropane triacrylate, ethyleneglycol dimethacrylate, or another multifunctional acrylic acid ester; etc. may be mentioned.

The amount of use of the monomer containing an unsaturated cross-linkable group is preferably 0.2 to 1.5 wt% with respect to the total amount of the monomer used for the polymerization of the acryl rubber (B1), more preferably 0.3 to 1.0 wt%. By including a monomer containing an unsaturated cross-linkable group in the above range, the content of the gel fraction in the acryl rubber (B1) can be controlled to the above range.

The method of production of the acryl rubber (B1) is not particularly limited. The polymerization may be performed by any known method including emulsion polymerization, suspension polymerization, bulk polymerization, and solution polymerization, but from the viewpoint of ease of control of the polymerization reaction etc., emulsion polymerization under ordinary pressure is preferable.

### Hydrogenated Nitrile Rubber (B2)

The hydrogenated nitrile rubber (B2) is a polymer obtained by hydrogenation of the carbon-carbon unsaturated bonds of the main chain of a rubber obtained by copolymerization of an α,β-ethylenic unsaturated nitrile monomer, conjugated diene monomer, and monomer copolymerizable with the same (nitrile rubber) . The polymerization for obtaining the nitrile rubber may be performed by any known method such as emulsion polymerization, suspension polymerization, bulk polymerization, or solution polymerization.

As the α, β-ethylenic unsaturated nitrile monomer, acrylonitrile, methacrylonitrile, α-chloroacrylonitrile, etc. may be mentioned. Among these, acrylonitrile is preferred.

The amount of the α,β-ethylenic unsaturated nitrile monomer used for production of the nitrile rubber is preferably 30 to 80 wt% in the total monomer used for the polymerization, more preferably 35 to 60 wt%. If the amount used of the α,β-ethylenic unsaturated nitrile monomer is too small, the obtained shaped article is liable to become inferior in oil resistance, while if too large, it may become inferior in cold resistance.

As the conjugated diene monomer, 1,3-butadiene, isoprene, 2,3-dimethyl-1,3-butadiene, 1,3-pentadiene, etc. may be mentioned. Among these, 1,3-butadiene is preferable.

As the monomer copolymerizable with an α,β-ethylenic unsaturated nitrile monomer and conjugated diene monomer, in the same way as explained in the explanation of an acryl rubber (B1), a monomer containing a cross-linkable group suitable for dynamic cross-linking and a monomer containing an unsaturated cross-linkable group added in the case of inclusion of a gel may be mentioned.

The amount used of the monomer containing a cross-linkable group is in preferably 0.5 to 10 wt%, more preferably 1 to 5 wt% in the total monomer.

The amount used of the monomer containing an unsaturated cross-linkable group is preferably 0.2 to 1.5 wt%, more preferably 0.3 to 1.0 wt% with respect to the total amount of the monomer used for the polymerization of the acryl rubber (B1).

In the hydrogenated nitrile rubber (B2), as the copolymerizable monomer, a monomer containing a cross-linkable group suitable for dynamic vulcanization, a monomer containing an unsaturated cross-linkable group, and, further, in accordance with need, a nonconjugated diene monomer, α-olefin monomer, aromatic vinyl monomer, fluorine-containing vinyl monomer, α,β-ethylenic unsaturated monocarboxylic acid ester, α, β-ethylenic unsaturated polyhydric carboxylic acid polyhydric ester, copolymerizable anti-aging agent, etc. may be used. The ratio of the copolymerizable monomer added in accordance with need with respect to the total monomer used for the polymerization of the nitrile rubber is preferably 5 to 50 wt%, more preferably 10 to 40 wt% or less, particularly preferably 15 to 30 wt% or less.

As the nonconjugated diene monomer, a C₅ to C₁₂ one is preferable. 1,4-pentadiene, 1,4-hexadiene, vinylnorbornene, dicyclopentadiene, etc. may be mentioned.

As the α-olefin, a C₂ to C₁₂ one is preferable. Ethylene, propylene, 1-butene, 4-methyl-1-pentene, 1-hexene, 1-octene, etc. may be mentioned.

As the aromatic vinyl monomer, for example, styrene, α-methylstyrene, vinylpyridine, etc. may be mentioned.

As the fluorine-containing vinyl monomer, for example, fluoroethyl vinyl ether, fluoropropyl vinyl ether, o-trifluoromethylstyrene, vinyl pentafluorobenzoate, difluoroethylene, tetrafluoroethylene, etc. may be mentioned.

As the α,β-ethylenic unsaturated monocarboxylic acid ester, for example, ethyl (meth)acrylate, butyl (meth)acrylate, 2-ethylhexyl (meth)acrylate, etc. may be mentioned.

As the α, β-ethylenic unsaturated poly carboxylic acid poly ester, for example, dimethyl maleate, di-n-butyl fumarate, dimethyl itaconate, di-2-ethylhexyl itaconate, etc. may be mentioned.

As the copolymerizable anti-aging agent, for example, N-(4-anilinophenyl)acrylamide, N-(4-anilinophenyl)methacrylamide, N-(4-anilinophenyl)cinnamide, N-(4-anilinophenyl)crotonamide, N-phenyl-4-(3-vinylbenzyloxy) aniline, N-phenyl-4-(4-vinylbenzyloxy)aniline, etc. may be mentioned.

The hydrogenation of the carbon-carbon double bond parts of the main chain of the nitrile rubber (nonhydrogenated) obtained by polymerization of the above monomer may be performed by a known method. The iodine value of the hydrogenated nitrile rubber (B2) is preferably 80 or less, more preferably 50 or less, particularly preferably 20 or less. If the iodine value is too high, the shaped article is liable to decline in resistance to heat aging and ozone resistance.

### Polyether Rubber (B3)

The polyether rubber (B3) is a polymer having repeating units of a ring-opening structure of a three-member ring ether-containing monomer as a main structural unit. As the polyether rubber, any of a rubber mainly comprised of ethylene oxide monomer units, rubber mainly comprised of epihalohydrin monomer units, or a copolymer of ethylene oxide and epihalohydrin may be used, but among these a rubber mainly comprised of epihalohydrin monomer units (epihalohydrin rubber) is preferable.

The epihalohydrin rubber is a ring-opening polymer of epihalohydrin monomer [hereinafter referred to as the "monomer (b31)"] or a ring-opening copolymer of the monomer (b31) and a monomer copolymerizable with the same. The monomer (b31) is a monomer having a cross-linkable group suitable for dynamic cross-linking comprised of a halogen-containing group.

As the monomer (b31), epichlorohydrin, epibromohydrin, 2-methyl epichlorohydrin, etc. may be mentioned, but among these epichlorohydrin is preferable.

The content of the monomer (b31) units with respect to the total monomer units forming the epihalohydrin rubber is not particularly limited, but is preferably 20 to 100 mol%, more preferably 25 to 90 mol%, particularly preferably 30 to 85 mol%. If the content of the monomer (b31) units is too small, the shaped article is liable to become higher in moisture absorption, while if too large, the shaped article may become inferior in cold resistance.

As the monomer able to be copolymerized with the monomer (b31), an oxirane monomer may be mentioned. Among these, an alkylene oxide monomer [hereinafter referred to as the "monomer (b32)"] is preferable. As specific examples of the monomer (b32), ethylene oxide, propylene oxide, 1,2-epoxybutane, 2,3-epoxybutane, 1,2-epoxy-4-chloropentane, 1,2-epoxyhexane, 1,2-epoxyoctane, 1,2-epoxydecane, 1,2-epoxytetradecane, 1,2-epoxyhexadecane, 1,2-epoxyoctadecane, 1,2-epoxyeicosan, 1,2-epoxyisobutane, 2,3-epoxyisobutane, or other linear or branched alkylene oxide; 1,2-epoxycyclopentane, 1,2-epoxycyclohexane, 1,2-epoxycyclododecane, or other cycle alkylene oxide; etc. may be mentioned. Among these, a linear alkylene oxide is preferable and ethylene oxide or propylene oxide is more preferable. The alkylene oxide may be one with part of the hydrogen atoms substituted by a halogen.

The amount used of the monomer (b32) with respect to the total monomer used for polymerization of the epihalohydrin rubber is not particularly limited, but is preferably 0 to 80 mol%, more preferably 10 to 75 mol%, particularly preferably 15 to 70 mol%. If the amount used of the monomer (b32) is too great, foaming easily occurs at the time of shaping. Further, the obtained shaped article may become higher in moisture absorption.

An epihalohydrin rubber contains monomer (b31) units, so the halogen groups of the polymer molecules become cross-linking points of the dynamic cross-linking, but as part of the monomer copolymerizable with the monomer (b31), other monomer (b33) units having cross-linkable groups suitable for dynamic cross-linking may also be included as copolymer ingredients.

As such a monomer (b33), vinylglycidyl ether, allylglycidyl ether, o-allylphenyl glycidyl ether, or another compound having a glycidyl ether group; glycidyl acrylate, glycidyl methacrylate, glycidyl crotonate, glycidyl-4-heptenoate, glycidyl sorbate, glycidyl linolate, a glycidyl ester of 3-cyclohexene carboxylic acid, a glycidyl ester of 4-methyl-3-cyclohexene carboxylic acid, glycidyl-4-methyl-3-heptenoate, or another compound having a glycidyl ester group; 3,4-epoxy-1-butene, 1,2-epoxy-3-pentene, 1,2-epoxy-5,9-cyclododecadiene, or another epoxy group-containing unsaturated hydrocarbon; etc. may be mentioned. Among these, if allylglycidyl ether is used, the shaped article will be superior in ozone resistance, so this is preferable.

The amount used of the monomer (b33) in the total monomer used for the polymerization of the epihalohydrin rubber is not particularly limited, but is preferably 15 mol% or less, more preferably 10 mol% or less. If the amount used of the monomer (b33) is too great, the shaped article is liable to become too low in elongation at break.

The polyether rubber (B3) is produced by ring-opening polymerization of the above monomer in an organic solvent by known solution polymerization, solvent slurry polymerization, etc. The ring-opening polymerization catalyst is not particularly limited, but for example an organic aluminum-water based catalyst, organic aluminum-phosphoric acid based catalyst, a polyphosphoric ester based catalyst, or other polymerization catalyst conventionally known as a ring-opening polymerization catalyst of an oxirane compound may be used.

The ratio of use of the polyester resin (A) and rubber (B) in the present invention composition is, by weight ratio, 20:80 to 95:5, preferably 50:50 to 80:20. If the amount of the rubber (B) is too small, the shaped article is liable to become greater in compression set. Conversely, if too great, the dispersion of the rubber (B) at the time of dynamic cross-linking becomes insufficient. Further, the workability of the thermoplastic elastomer composition may drop.

### Method of Preparation of Thermoplastic Elastomer Composition

To prepare a thermoplastic elastomer composition of the present invention, the polyester resin (A) and the rubber (B) are kneaded and the rubber (B) is dynamically cross-linked. This dynamic cross-linking means to knead the polyester resin (A) and rubber (B) to finely disperse the rubber (B) in the matrix of the polyester resin (A) and to cross-link the rubber (B) by a cross-linking agent. By dynamic cross-linking, the obtained composition can give a shaped article improved in mechanical strength and fatigue resistance with respect to bending and stretching.

As the cross-linking agent for the dynamic cross-linking in the present invention composition, a cross-linking agent generally used as a cross-linking agent of rubber may be used, but the following ones are preferably used in accordance with the type of the cross-linkable groups of the rubber (B).

That is, when the cross-linkable groups are halogen-containing groups, a sulfur cross-linking agent (metal soap may be jointly used), triazine cross-linking agent, etc. may be mentioned.

When the cross-linkable groups are epoxy groups, an organic ammonium cross-linking agent, imidazole cross-linking agent, polyhydric acid cross-linking agent, etc. may be mentioned.

When the cross-linkable groups are carboxyl groups, a polyhydric amine cross-linking agent, diisocyanate cross-linking agent, etc. may be mentioned.

The amount used of the cross-linking agent is preferably 0.1 to 2 parts by weight with respect to 100 parts by weight of the total of the polyester resin (A) and rubber (B), more preferably 0.5 to 1 part by weight. If the amount of the cross-linking agent is too small, the cross-linking at the time of dynamic cross-linking does not sufficiently proceed, the rubber (B) does not sufficiently disperse in the polyester resin (A), and the shaped article is liable to increase in compression set, while if conversely too great, the decomposition of the polyester resin (A) may be accelerated.

As the method of dynamic cross-linking, any general dynamic cross-linking method in working of rubber may be used. For example, the following method may be mentioned. First, the rubber (B) is kneaded by a kneader usually at 160 to 300°C, preferably 180 to 250°C, while giving shear, then the polyester resin (A) is added to this and the kneading is continued, whereby the rubber (B) is dispersed in the matrix of the molten polyester resin (A). Next, when the rubber (B) is sufficiently finely dispersed in the matrix of the polyester resin (A), the cross-linking agent is added and further kneaded, whereby the rubber (B) is cross-linked.

If the kneading temperature is too low, the polyester resin (A) is liable not to sufficiently melt. Conversely, if too high, the rubber (B) may degrade under heat. As the kneader, a Bravender mill, Labo Plastomill, or other batch type kneader; single-screw extruder, twinscrew extruder, or other continuous type kneader; etc. may be used. When using an extruder or other continuous type kneader, the cross-linking agent is preferably added from addition holes provided in the middle of the barrel of the extruder.

### Plasticizer

The thermoplastic elastomer composition of the present invention may also contain a plasticizer along with the polyester resin (A) and rubber (B).

As the plasticizer, a generally used one as the plasticizer contained in the thermoplastic elastomer composition may be used, but for example a mineral oil softening agent, an aromatic ester plasticizer, an aliphatic ester plasticizer, a glycol-ester plasticizer, an epoxy plasticizer, a phosphoric acid ester plasticizer, etc. may be mentioned.

The amount used of the plasticizer is preferably 1 to 10 parts by weight with respect to 100 parts by weight of the total of the polyester resin (A) and rubber (B), more preferably 3 to 8 parts by weight. By including the plasticizer, the flexibility and bending resistance can be further improved. Note that when including a plasticizer in the present invention composition, this is preferably added before the dynamic cross-linking.

### Other Additives

Further, to an extent not impairing the effects of the present invention, carbon black, silica, or another filler, an anti-aging agent, lubricant, or other additive generally blended in for working a rubber or resin may also be used.

### Shaped Article

The composition of the present invention obtained by the above method is comprised of particles of the cross-linked rubber (B) dispersed in a matrix of the polyester resin (A) and has the properties of a thermoplastic elastomer. The composition of the present invention is a thermoplastic elastomer, so like an ordinary thermoplastic resin, can be shaped at 160 to 350°C by extrusion, injection molding, transfer molding, compression molding, calendaring, or another method to form any shape of shaped article.

The thus obtained shaped article of the present invention has rubber elasticity, heat resistance, and oil resistance and is excellent in tensile strength and elongation, small in compression set, and superior in fatigue resistance. For this reason, it may be suitably used for various auto related rubber parts such as shaft seals, bearing seals, and other seal parts; air duct hoses, fuel hoses, oil hoses, and other hose parts; equal velocity joint boots, rack and pinion boots, and other boots etc.

### EXAMPLES

To explain the present invention in further detail, examples and comparative examples will be explained below, but the present invention is not limited to these examples. Note that unless indicated to the contrary, the "parts" and "%" are based on weight. The physical properties in the examples and comparative examples were measured by the following methods.
(1) Melt Flow Rate (MFR) of Polyester Resin (A) The melt flow rate (MFR) of the polyester resin (A) was found based on JIS K7210 at 250°C with a load of 2.16 kg.
(2) Melting Point of Polyester Resin (A)
   The melting point of the polyester resin (A) was found using a differential scan calorimeter from the peak temperature of the heat of fusion.
(3) Gel Content (Gel Fraction) of Rubber (B)
   The gel content (gel fraction) of the rubber (B) was found by measuring the ratio of the solvent insolubles when dissolving the rubber (B) in a good solvent. Specifically, first, about 0.2 g of rubber (B) was precision weighed and dissolved in methyl ethyl ketone (MEK). Next, the obtained solution was filtered by an #80 mesh wire net. The solvent was removed from the insolubles trapped in the filter and the weight of the insolubles after solvent removal was measured. Further, the weight ratio (%) of the insolubles after solvent removal with respect to the weight of the rubber before dissolution in the MEK was calculated and used as the gel fraction.
(4) Tensile Strength and Tensile Elongation at Break (Elongation)
   First, a thermoplastic elastomer composition was used to form a sheet of a thickness of 2 mm by a press preheated to 250°C. Further, the obtained 2 mm thick sheet was punched to a predetermined shape to prepare a test piece and the obtained test piece was used to measure the tensile strength and elongation in accordance with the tensile test method of JIS K6251.
(5) Compression Set
   In accordance with JIS K6262, a test piece for compression set measurement was prepared by injection molding and was measured for compression set under compression conditions of a 25% compression rate, 120°C, and 70 hours.
(6) Fatigue Resistance
   A test piece punched out from a 2 mm thick sheet into a predetermined shape was prepared. The test piece was stretched to a length of 1/2 of the elongation at break, then returned to the 0% stretched state. This operation was repeated at a speed of 300 times/min. The number of operations until the test piece broke was measured. The larger the number of operations until breaking, the better the fatigue resistance.

### Production Example 1

### Production of Acryl Rubber (B11)

A polymerization reactor equipped with a thermometer, stirring device, nitrogen introduction tube, and pressure reduction device was charged with ion exchanged water in an amount of 200 parts, sodium laurosulfate 3 parts, ethyl acrylate 47 parts, n-butyl acrylate 50 parts, ethyleneglycol dimethacrylate 1 part, and monomethyl fumarate 2 parts. The air was evacuated by reduced pressure and nitrogen was substituted two times repeatedly to sufficiently remove the oxygen, then sodium formaldehyde sulfoxylate was added in an amount of 0.002 part and cumen hydroperoxide in 0.005 part, an emulsion polymerization reaction was started at 20°C under ordinary pressure, and the reaction was continued until the polymerization conversion rate reached 95% or more. The obtained latex was made to coagulate by a calcium chloride aqueous solution, then the crumbs were rinsed and dried to obtain acryl rubber (B11) containing carboxyl groups. The gel fraction of the acryl rubber (B11) was 80%, and the Mooney viscosity [ML₁₊₄(100°C)] was 45.

### Production Example 2

### Production of Hydrogenated Nitrile Rubber (B21)

A polymerization reactor equipped with a thermometer, stirring device, nitrogen introduction tube, and pressure reduction device was charged with ion exchanged water in an amount of 200 parts, sodium laurosulfate 3 parts, acrylonitrile 30 parts, and butadiene 67 parts. The air was evacuated by reduced pressure and nitrogen was substituted two times repeatedly to sufficiently remove :the oxygen, then sodium formaldehyde sulfoxylate was added in an amount of 0.002 part and cumen hydroperoxide in 0.005 part, an emulsion polymerization reaction was started at 10°C under ordinary pressure, and the reaction was continued until the polymerization conversion rate reached 95% or more to obtain a latex of nitrile rubber. Next, part of the obtained latex of nitrile rubber was used and adjusted to a total solids concentration of 12 wt%. Further, 4 liters of the latex adjusted to a total solids concentration of 12 wt% (total solids content of 480 g) was charged into a 10-liter autoclave equipped with a stirrer, then nitrogen gas was run for 10 minutes to remove the dissolved oxygen in the latex. After this, a hydrogenation catalyst comprised of palladium acetate was dissolved in water of 2.4 liters of four times the molar amount and was added into 4 liters of latex. Further, the system was substituted with hydrogen gas two times, then the content was raised to 50°C and pressurized by hydrogen gas to 3 MPa. In that state a hydrogenation reaction was conducted for 6 hours. Next, the content was coagulated by calcium chloride, rinsed, and dried to obtain a hydrogenated nitrile rubber (B21) with a hydrogenation rate of 95%. The obtained hydrogenated nitrile rubber (B21) had a gel fraction of 85%, a Mooney viscosity [ML₁₊₄(100°C)] of 80, and an iodine value of 20.

### Example 1

### Kneading and Dynamic Cross-Linking of Polyester Resin (A1) and Acryl Rubber (B11)

A mixer preheated to 230°C using a Labo Plastomill made by Toyo Seiki (volume 600 ml) was charged with the above produced acryl rubber (B11) in an amount of 40 parts and masticated for 1 minute, then was charged with a polyester resin [A1: polybutylene terephthalate, melt flow rate 6.0 g/10 min, melting point 223°C] in an amount of 60 parts. These were mixed for 5 minutes, then 2-methylimidazole (cross-linking agent) in an amount of 0.5 part was charged and the mixture mixed for 7 minutes to dynamically cross-link the acryl rubber (B11). After the end, the mixture was quickly taken out and pressed by a non-preheated press so as to fabricate a sheet shaped sample. Next, the prepared sample was pressed by a press preheated to 250°C to shape a sheet of a thickness of 2 mm. The sheet was tested and evaluated for tensile strength, elongation, compression set, and fatigue resistance. The results are shown in Table 1.

### Example 2

### Kneading and Dynamic Cross-Linking of Polyester Resin (A2) and Acryl Rubber (B11)

The same procedure was followed as in Example 1 for kneading and dynamic cross-linking except that instead of the polyester resin (A1), the polyester resin (A2: polybutylene terephthalate, melt flow rate 12.5 g/10 min, melting point 223°C) was used. The sample was tested and evaluated in the same way as Example 1. The results are shown in Table 1.

### Example 3

### Kneading and Dynamic Cross-Linking of Polyester Resin (A1) and Hydrogenated Nitrile Rubber (B21)

The same procedure was followed as in Example 1 for kneading and dynamic cross-linking except that instead of the acryl rubber (B11), hydrogenated nitrile rubber (B21) was used, and instead of the cross-linking agent comprised of 2-methyl imidazole with #325 mesh sieved powder sulfur (S#325, made by Hosoi Chemical Industry) was used. The sample was tested and evaluated in the same way as Example 1. The results are shown in Table 1.

### Example 4

### Kneading and Dynamic Cross-Linking of Polyester Resin (A1) and Polyether Rubber (B31)

The same procedure was followed as in Example 1 for kneading and dynamic cross-linking except that instead of the acryl rubber (B11), a polyether rubber [B31: Gechron 3105, made by Zeon Corporation, epichlorohydrin-ethylene oxide-allylglycidyl ether copolymer, chlorine content center value 27.5%, Mooney viscosity (ML₁₊₄(100°C)) 76.5] was used, and instead of the cross-linking agent comprised of 2-methylimidazole, 1,3,5-triazine trithiol was used. The sample was tested and evaluated in the same way as Example 1. The results are shown in Table 1.

### Example 5

### Use of Plasticizer as Additive

The same procedure was followed as in Example 1 for kneading and dynamic cross-linking except that when kneading the polyester resin (A1) and acryl rubber (B11), 5 parts by weight of a plasticizer comprised of a glycol-ester plasticizer (Adekacizer RS-735: made by Asahi Denka) was further added with respect to 100 parts by weight of the total of the polyester resin (A1) and acryl rubber (B11). The sample was tested and evaluated in the same way as Example 1.

### Example 6

### Use of Plasticizer as an Additive

The same procedure was followed as in Example 2 for kneading and dynamic cross-linking except that when kneading the polyester resin (A2) and acryl rubber (B11), 3 parts by weight of a plasticizer comprised of a glycol-ester plasticizer (Adekacizer RS-735: made by Asahi Denka) was further added with respect to 100 parts by weight of the total of the polyester resin (A2) and acryl rubber (B11). The sample was tested and evaluated in the same way as Example 2.

### Comparative Example 1

### Kneading and Dynamic Cross-Linking of High MFR Polyester Resin (A3) and Acryl Rubber (B11)

The same procedure was followed as in Example 1 for kneading and dynamic cross-linking except that instead of the polyester resin (A1), a high MFR polyester resin [A3: polybutylene terephthalate, melt flow rate 22.5 g/10 min, melting point 223°C] was used. The sample was tested and evaluated in the same way as Example 1. The results are shown in Table 1.

### Comparative Example 2

### Kneading of Polyester Resin (A1) and Nonhydrogenated Nitrile Rubber (B4)

The same procedure was followed as in Example 3 for kneading and dynamic cross-linking except that instead of the hydrogenated nitrile rubber (B21), a non-hydrogenated nitrile rubber (B4) was used. The sample was tested and evaluated in the same way as Example 3. The results are shown in Table 1. Note that in Comparative Example 2, as the non-hydrogenated nitrile rubber (B4), a non-hydrogenated nitrile rubber (B4) obtained by coagulating part of the nitrile rubber latex before hydrogenation in the above Production Example 2 by calcium chloride and rinsing and drying it was used. This non-hydrogenated nitrile rubber (B4) had a Mooney viscosity [ML₁₊₄(100°C)] of 45.

### [Table 1]

**Table 1**

| | | Examples | | | | | | Comp. ex. | |
|---|---|---|---|---|---|---|---|---|---|
| | | 1 | 2 | 3 | 4 | 5 | 6 | 1 | 2 |
| | Polyester resin (A) | A1 | A2 | A1 | A1 | A1 | A2 | A3 | A1 |
| | Rubber(B) | B11 | B11 | B21 | B31 | B11 | B11 | B11 | B4 |
| Formation | Cross-linking agent | Cross-linking agent 1 | Cross- linking agent 1 | Cross- linking agent 2 | Cross- linking agent 3 | Cross- linking agent 1 | Cross- linking agent 1 | Cross- linking agent 1 | Cross-linking agent 2 |
| | Plasticizer | - | - | - | - | 5 | 3 | - | - |
| | Tensile strength (MPa) | 19.3 | 13.5 | 28.5 | 18.5 | 16.5 | 12.0 | 13.2 | 3.5 |
| Test and evaluation | Elongation (%) | 185 | 195 | 310 | 160 | 175 | 180 | 125 | 120 |
| | Compression set (%) | 45 | 65 | 50 | 55 | 38 | 60 | 65 | 95 |
| | Fatigue resistance (cycles) | 3,500,000 | 2,000,000 | 3,500,000 | 2,500,000 | 4,500,000 | 2,500,000 | 700 | 300 |

| | | | | | | | | | |
|---|---|---|---|---|---|---|---|---|---|
| Cross-linking agent 1 2-methyl imidazole Cross-linking agent 2: powdered sulfur (325 mesh product) Cross-linking agent 3:2,4,6-trimercapto-s-triazine Plasticizer: Adekacizer-RS-735 (made by Asahi Denka) | | | | | | | | | |

As shown in Table 1, the thermoplastic elastomer compositions satisfying the requirements of the present invention all gave shaped articles excellent in tensile strength and elongation, low in compression set, and superior in fatigue resistance (Examples 1 to 6).

On the other hand, the composition comprised of a polyester resin with too large a melt flow rate kneaded together with the same acryl rubber (B11) as used in Examples 1 and 2 and dynamically cross-linked gave a shaped article small in elongation and inferior in fatigue resistance (Comparative Example 1).

Further, the composition using the nonhydrogenated nitrile rubber (B4) instead of the hydrogenated nitrile rubber (B11) in Example 3 gave a shaped article small in tensile strength and elongation, large in compression set, and remarkably low in fatigue resistance (Comparative Example 2).

## Claims

1. A thermoplastic elastomer composition comprised of:
20 to 95 wt% of a polyester resin (A) having a melt flow rate of 4 g/10 min to less than 20 g/10 min and
80 to 5 wt% of at least one type of rubber (B) selected from an acryl rubber (B1), hydrogenated nitrile rubber (B2), and polyether rubber (B3),
wherein said rubber (B) is dynamically cross-linked.

2. The thermoplastic elastomer composition as set forth in claim 1, wherein said polyester resin (A) is an aromatic polyester resin.

3. The thermoplastic elastomer composition as set forth in claim 1 or 2, wherein said polyester resin (A) has a weight average molecular weight of 40,000 to 100,000.

4. The thermoplastic elastomer composition as set forth in any one of claims 1 to 3, further including 0.1 to 2 parts by weight of a cross-linking agent with respect to 100 parts by weight of the total of said polyester resin (A) and said rubber (B) .

5. The thermoplastic elastomer composition as set forth in any one of claims 1 to 4, further including 1 to 10 parts by weight of a plasticizer with respect to 100 parts by weight of the total of said polyester resin (A) and said rubber (B).

6. A shaped article obtained by molding the thermoplastic elastomer composition as set forth in any one of claims 1 to 5 at 160 to 350°C.
